# NEW EUROPEAN PATENT SPECIFICATION

(11) **EP 3 065 557 B2**
(45) Date of publication and mention of the opposition decision: **26.03.2025**
(45) Mention of the grant of the patent: 20.11.2019
(21) Application number: 14796363.1
(22) Date of filing: 28.10.2014
(51) Int. Cl.: A23K 40/30, A23K 10/16, A23K 10/26, A23K 20/147, A23K 20/26, A23K 50/42

(54) **DRY PET FOOD COMPRISING A PALATABILITY ENHANCING COATING**
TROCKENES HAUSTIERFUTTER MIT BESCHICHTUNG ZUR VERBESSERUNG DER SCHMACKHAFTIGKEIT
ALIMENTS SECS POUR ANIMAUX DOMESTIQUES COMPRENANT UN REVÊTEMENT AMÉLIORANT L'APPÉTENCE

(30) Priority: 29.10.2013 EP 13190671
(43) Date of publication of application: 14.09.2016
(60) Divisional application: 19200529.6
(73) Proprietor: Mars, Incorporated, McLean, VA 22101 (US)
(72) Inventor: MAO, Mathieu, 27283 Verden (DE); BECKMANN, Christoph Hendrik, 27283 Verden (DE)
(74) Representative: Haseltine Lake Kempner LLP
(86) International application number: PCT/US2014/062629
(87) International publication number: WO 2015/066009

(56) References cited:
- WO-A1-00/30456
- WO-A1-00/30456
- WO-A1-2009/148521
- WO-A1-2012/148769
- WO-A1-2013/007639
- WO-A1-2013/007639
- WO-A2-2006/074087
- US-A- 4 215 149
- US-A1- 2011 159 149
- BELITZ, H.-D., GROSCH, W.: "Food Chemistry", 1 January 1999, SPRINGER VERLAG, Berlin, Heidelberg, ISBN: 3-540-64704-X, article "Chapter 8 Food additives: 5`-Nucleotides", XP002719051

## Description

### TECHNICAL FIELD OF THE INVENTION

The present invention relates to a dry pet food, more particularly it relates to a dry pet food comprising a core that contains starch and protein and a palatability enhancing coating that contains edible phosphate salt and yeast extract and is pertained to the appended claims.

Examples of dry pet food according to the present invention include coated kibbles for cats or dogs. Kibbles may be formed, for instance, by an extrusion or compaction process in which kibble raw materials (e.g. cereal flour, meat meal etc.) are pressed to form an extruded or pelletized kibble. The palatability enhancing coating can be applied onto the kibble core during or after extrusion or compaction.

### BACKGROUND OF THE INVENTION

Pet food is commonly categorized on the basis of its moisture content:
(1) dry or low moisture content products (typically less than 15%). The products typically combine high nutritional content with convenience, but are generally less palatable;
(2) wet or high moisture content products (greater than about 50%). These products are generally; most palatable to the pets;
(3) semi-moist or semi-dry or soft dry or intermediate or medium moisture content products (generally between 15 and 50%). These products are usually less palatable than wet or high moisture pet food but more palatable than dry pet food.

Pets, like humans, are attracted to food that they find palatable. Therefore, palatability enhancers are very important for animal consumption, especially for dry pet food as this type of pet food is generally less preferred by pets.

It is well-known in the art to incorporate palatability enhancing ingredients in dry pet food to increase the palatability thereof and to make them more appealing to pets. Examples of such palatability enhancing ingredients include: animal digest, animal fat, yeast autolysate, flavouring etc.

Dry pet foods containing palatability enhancing ingredients have been described in the prior art.

WO 2013/007639 describes a palatability-enhancing composition for pet food comprising about 1 to 70% by weight of free amino acids, where at least two amino acids are chosen from Ala, Glu, Pro, Leu, Asp, Tyr, Phe, Met or, alternatively from Met, Glu, Pro, Gly, Leu, Asp, Tyr, Phe. Examples 2 and 7 describe the preparation of a dry cat food by coating a dried extruded food composition with poultry fat and two different dry palatability-enhancing compositions comprising trisodium pyrophosphate and brewer's yeast.

US 2013/0122154 describes a pet food product comprising:
- a kibble;
- a first coating on the kibble, the first coating comprising a plasticizer; and
- a second coating on the kibble, the second coating comprising a fat;
- wherein the coated kibble has a moisture level less than 12%

The examples of this US patent application describe the preparation of coated kibble by extruding a hydrated blend, drying the extrudate, followed by subsequently coating the dried extrudate with glycerine and a fat system containing chicken fat and beef tallow. It is observed in the patent application that the kibble may be further coated with a standard palatant blend.

US 2011/0159149 describes a palatability enhancing composition that can be applied to a surface of a companion animal food, said composition comprising at least one palatant and/or at least one tasteant modified by glycerol and/or propylene glycol. The palatant may be selected from the group consisting of phosphates, pyrophosphates, proteins, protein hydrolysates, biological extracts, dried yeast, yeast extracts, peptones and combinations thereof.

US 2001/0002272 describes a method for enhancing the palatability of an extruded pet food, said method comprising the steps of: providing a palatability enhancing composition including tetrasodium pyrophosphate; and applying the palatability enhancer to the extruded pet food.

JP3206853 describes the preparation of pet food kibbles by extruding a composition containing cereal flours, meat meal, fish meal, wheat germ, brewer's yeast, vitamins, minerals and water; drying the extrudate; and coating the dried extrudate with beef tallow and yeast extract.

However, palatability of known dry pet foods, such as kibbles for cats or dogs, can still be improved.

### SUMMARY OF THE INVENTION

The inventors have discovered that palatability of certain dry pet food products can be improved significantly by coating the food product with a covering layer that contains dry yeast extract, edible phosphate salt; and optionally other edible components.

One aspect of the invention relates to a dry pet food comprising 50-99.5 wt.% of a core and 0.5-50 wt.% of an external coating that covers at least a part of the core and that is composed of one or more layers, including a covering layer that is located on the outside of the pet food, said dry pet food having a total water content of not more than 15 wt.%; said core containing:
- carbohydrates in a concentration of 20-90 % by weight of the core, said carbohydrates including starch in a concentration of 5-50% by weight of the core;
- protein in a concentration of 10-50% by weight of the core;
- fat in a concentration of 0-40% by weight of the core;
said covering layer being composed of:
- 10-80 wt.% dry yeast extract;
- 0.5-30 wt.% of edible phosphate salt selected from pyrophosphate, triphosphate and combinations thereof;
- 0-70 wt.% of other edible components;
wherein the dry yeast extract is contained in the covering layer in a concentration of 0.3-10% by weight of the dry pet food and wherein the edible phosphate salt is contained in the covering layer in a minimum concentration of at least 0.1% by weight of the dry pet food and in a maximum concentration that does not exceed 0.4% by weight of the dry pet food.
wherein the dry yeast extract is contained in the covering layer in a concentration of 0.1-10% by weight of the dry pet food and wherein the edible phosphate salt is contained in the covering layer in a maximum concentration that does not exceed 0.4% by weight of the dry pet food.

The combined application of yeast extract and edible phosphate salt in a covering layer of the dry pet food product was found to significantly improve the palatability of the product as compared to a coated food product in which either of the two components is lacking. The improved palatability of the dry pet food of the present invention, in particular the 'reduced phosphate embodiment', can suitably be demonstrated in a test where the total amount of eaten product is monitored and compared to a suitable control.

Another aspect of the invention concerns the use of the aforementioned dry pet food for feeding a companion animal selected from cats and dogs.

Yet another aspect of the invention relates to a process of manufacturing the aforementioned dry pet food, said process comprising the successive steps of:
- providing a dough comprising 20-40 wt.% starch; 10-40 wt.% protein; and 15-45 wt.% water;
- extruding the dough employing extrusion temperatures that exceeds 105°C;
- optionally, applying one or more coating compositions onto the extrudate; and
- applying a palatability enhancing composition onto the optionally coated extrudate, said palatability enhancing composition containing yeast extract and edible phosphate salt selected from pyrophosphate, triphosphate and combinations thereof.

### DETAILED DESCRIPTION OF THE INVENTION

A first aspect of the present invention relates to a dry pet food comprising 50-99.5 wt.% of a core and 0.5-50 wt.% of an external coating that covers at least a part of the core and that is composed of one or more layers, including a covering layer that is located on the outside of the pet food, said dry pet food having a total water content of not more than 15 wt.%; said core containing:
- carbohydrates in a concentration of 20-90% by weight of the core, said carbohydrates including starch in a concentration of 5-50% by weight of the core;
- protein in a concentration of 10-50% by weight of the core;
- fat in a concentration of 0-40% by weight of the core;
said covering layer being composed of:
- 10-80 wt.%, preferably 1-50 wt.% dry yeast extract;
- 0.5-30 wt.% of edible phosphate salt selected from pyrophosphate, triphosphate and combinations thereof;
- 0-70 wt.% of other edible components;
wherein the dry yeast extract is contained in the covering layer in a concentration of 0.3-10% by weight of the dry pet food and wherein the edible phosphate salt is contained in the covering layer in a minimum concentration of at least 0.1% by weight of the dry pet food and in a maximum concentration that does not exceed 0.4% by weight of the dry pet food.

The term "pet" as used herein refers to a domestic animal, including domestic dogs, cats, rabbits, guinea pigs, rats, mice, gerbils and hamsters.

The term "pet food" as used herein refers to a food composition designed for ingestion by a pet. The dry pet food of the present invention may be a nutritionally balanced food product to provide a pet with all the essential nutrients it needs in the right quantities. The dry pet food can also be a food composition that is not nutritionally balanced, e.g. a treat that is occasionally given to a pet.

The term "carbohydrates" as used herein refers to an organic compound comprising only carbon, hydrogen, and oxygen, usually with a hydrogen:oxygen atom ratio of 2:1; in other words, with the empirical formula Cₘ(H₂O)ₙ. Examples of carbohydrates include monosaccharides, disaccharides, oligosaccharides and polysaccharides.

The term "gelatinized starch" as used herein refers to starch that has undergone a process that breaks down the intermolecular bonds of starch molecules in the presence of water and heat, allowing the hydrogen bonding sites (the hydroxyl hydrogen and oxygen) to engage more water. This process irreversibly dissolves the starch granule and the penetration of water increases randomness in the general starch granule structure and decreases the number and size of crystalline regions. Under the microscope in polarized light starch loses its birefringence and its extinction cross.

The term "pyrophosphate" as used herein, unless indicated otherwise, refers to salts of diphopsphate (P₂O₇), including salts of hydrogendiphosphates.

The term "triphosphate" as used herein, unless indicated otherwise, refers to salts of triphopsphate (P₃O₁₀), including salts of hydrogentriphosphates.

The term "proteinaceous matter" as used herein refers to polypeptides, oligopeptides, dipeptides and free amino acids.

The term "hydrolyzed protein" as used herein refers to proteinaceous matter that is produced by partial or complete hydrolysis of protein.

The term "degree of hydrolysis" or "DH" as used herein is defined as follows: DH = (Number of peptide bonds cleaved / Total number of peptide bonds) x 100%.

The term "fat" as used herein refers to esters of fatty acids such as triglycerides, diglycerides, monoglycerides and phospholipids.

The term "yeast extract" as used herein refers to a yeast product made by extracting the cell contents from yeast (removing the cell walls).

The term "dry yeast extract" as used herein, unless indicated otherwise, refers to the dry matter that is contained in a yeast extract.

The term "animal digest" as used herein refers to meat or animal by-products that have been hydrolyzed, e.g. by using acid, base, salt, heat, enzymes or any combination thereof.

The term "dry animal digest" as used herein, unless indicated otherwise, refers to the dry matter that is contained in aninmal digest.

The dry pet food of the present invention preferably is a dry pet food for cats or dogs. Most preferably, the dry pet food is a dry pet food for cats.

The water content of the dry pet food of the present invention typically does not exceed 10 wt.%, more preferably it does not exceed 8 wt.%.

The dry pet food according to the present invention typically has a piece weight (i.e. the weight of an individual piece of dry pet food) in the range of 0.05-100 g, more preferably in the range of 0.08-50 g and most preferably in the range of 0.1-5 g.

The core of the dry pet food typically represents 70-99 wt.%, more preferably 80-98 wt.% and most preferably 85-92 wt.% of the pet food. The core of the pet food can have all kinds of different shapes, such as a sphere, a disc, a ring, a cylinder etc.

According to a particularly preferred embodiment, the core of the dry pet food is a kibble, especially an extruded kibble.

Examples of carbohydrates that may be employed in the core of the dry pet food include starch, sugars (e.g. sucrose, glucose, fructose, lactose, maltose), fibres (e.g. cellulose). The protein contained in the core may be of vegetable (e.g. grain), animal (e.g. livestock, poultry, fish), marine and/or microbial origin. Preferably, at least 5 wt.%, more preferably at least 10 wt.% of the protein contained in the core is of animal origin.

The starch contained within the core of the dry pet food preferably is gelatinized starch.

Besides carbohydrates, protein, water and the optional fat component, the core may contain one or more other edible ingredients, such as preservatives (e.g. acids or edible salts thereof), antioxidants, minerals. Typically, these optional one or more other edible ingredients represent not more than 30 wt.%, more preferably not more than 20 wt.% and most preferably not more than 10% of the dry matter contained in the core of the pet food.

It is advantageous that the combination of yeast extract and phosphate salt is applied in a concentration level that achieves optimum palatability (referred to herein as the 'optimum palatability embodiment', which is not according to the claimed invention). In an alternative, equally advantageous embodiment (the 'reduced phosphate embodiment') the combination of yeast extract and phosphate salt is used to minimize the phosphate salt content. In the latter embodiment, the reduction in palatability resulting from the decrease phosphate salt content is compensated by the favourable impact of the yeast extract, i.e. the yeast extract effectively enhances the palatability contribution of the phosphate salt.

In the 'optimum palatability embodiment' of the dry pet food dry yeast extract is preferably contained in the covering layer of the dry pet food in a concentration of 0.15-8%, more preferably of 0.2-6%, even more preferably in a concentration of 0.3-4%, yet more preferably in a concentration of 0.5-2% and most preferably in a concentration of 0.7-1.6% by weight of the dry pet food.

In the 'optimum palatability embodiment'the covering layer advantageously contains 1-80 wt.% dry yeast extract, more preferably 5-60 wt.% dry yeast extract and most preferably 10-50 wt.% dry yeast extract.

Expressed differently, in this particular embodiment the dry yeast content of the covering layer preferably is in the range of 0.1-75% by weight of the external coating, more preferably in the range of 0.5-60% by weight of the external coating and most preferably 2-40% by weight of the external coating.

In the 'reduced phosphate embodiment' of the dry pet food dry yeast extract is contained in the covering layer of the dry pet food in a concentration of 0.3-10%, more preferably of 0.5-8%, even more preferably in a concentration of 0.7-6%, yet more preferably in a concentration of 0.8-4% and most preferably in a concentration of 1-3% by weight of the dry pet food.

Expressed differently, in this embodiment the dry yeast content of the covering layer preferably is in the range of 0.2-95% by weight of the external coating, more preferably in the range of 2-90% by weight of the external coating and most preferably 10-80% by weight of the external coating.

In the 'reduced phosphate embodiment' the covering layer advantageously contains 10-80 wt.% dry yeast extract and most preferably 20-70 wt.% dry yeast extract.

The dry yeast extract that is employed in the covering layer of the dry pet food product may be obtained from different types of yeast, such as *Saccharomyces, Pichia, Kluyveromyces, Hansenula, Candida.* The dry yeast extract in the covering layer preferably is obtained from a *Saccharomyces* yeast. Even more preferably, the dry yeast extract is obtained from *Saccharomyces cerevisiae.*

In accordance with another preferred embodiment the dry yeast extract is obtained from yeast that was produced in a brewing process.

According to a particularly preferred embodiment of the invention, the dry yeast extract employed in the covering layer is an agglomerated dry yeast extract. Preferably, the agglomerated dry yeast extract has a mass weighted average particle size of 50-1000 µm, more preferably of 100-800 µm and most preferably of 200-750 µm.

The edible phosphate salt that is contained in the covering layer preferably is pyrophosphate. Examples of pyrophosphates that may suitably be employed include tetrasodium pyrophosphate, trisodium pyrophosphate, disodium pyrophosphate, tetrapotassium pyrophosphate, tripotassium pyrophosphate, dipotassium pyrophosphate and combinations thereof. Preferably the pyrophosphate is selected from tetrasodium pyrophosphate, tetrapotassium pyrophosphate and combinations thereof. Most preferably, the pyrophosphate used is tetrasodium pyrophosphate.

In the aforementioned 'optimum palatability embodiment' of the dry pet food, the covering layer of the pet food advantageously contains 1-50%, more preferably 3-45% and most preferably 10-40% by weight of the covering layer of the edible phosphate salt.

In this same embodiment, the edible phosphate salt is preferably incorporated in the covering layer in a minimum concentration of at least 0.1%, more preferably at least 0.3%, even more preferably at least 0.5%, yet more preferably at least 0.7% and most preferably at least 1% by weight of the dry pet food. The edible phosphate salt is typically incorporated in the covering layer in a maximum concentration that does not exceed 5%, more preferably does not exceed 5%, even more preferably does not exceed 3%, yet more preferably does not exceed 2.% and most preferably does not exceed 1.5% by weight of the dry pet food.

In the 'optimum palatability embodiment' the dry yeast extract and the edible phosphate salt are advanteously contained in the covering layer in a weight ratio of dry yeast extract to phosphate salt of 6:1 to 1:4, more preferably of 4:1 to 1:3, even more preferably of 3:1 to 1:2 and most preferably of 2:1 to 2:3.

In the 'reduced phosphate embodiment' of the dry pet food, the covering layer of the pet food advantageously contains 0.5-30% and most preferably 1-20% by weight of the covering layer of the edible phosphate salt.

In the 'reduced phosphate embodiment', the edible phosphate salt is incorporated in the covering layer in a minimum concentration of at least 0.1%,yet more preferably at least 0.15% and most preferably at least 0.2% by weight of the dry pet food. The edible phosphatesalt is incorporated in the covering layer in a maximum concentration that does not exceed 0.4% and most preferably does not exceed 0.3% by weight of the dry pet food.

In the 'reduced phosphate embodiment' the dry yeast extract and the edible phosphate salt are advanteously contained in the covering layer in a weight ratio of dry yeast extract to phosphate salt of 20:1 to 1:2, more preferably of 10:1 to 1:1, even more preferably of 6:1 to 3:2 and most preferably of 5:1 to 2:1.

Besides the dry yeast extract and the edible phosphate salt, the covering layer contains other edible components in a concentraton of 0-70 wt.%, more preferably of 0-60 wt.% and most preferably of 0-50 wt.%.

According to another preferred embodiment, the covering layer contains hydrolyzed protein, preferably in a concentration of 2-10% by weight of the covering layer. The hydrolyzed protein in the covering layer preferably is selected from hydrolyzed animal protein, hydrolyzed vegetable protein and combinations thereof. Preferably hydrolyzed animal protein constitutes 20-100%, more preferably 25-60 % and most preferably 30-50% of the hydrolyzed protein in the covering layer. The hydrolyzed animal protein preferably originates from an animal selected from poultry, pig, beef, lamb, fish and combinations thereof.

The hydrolyzed protein in the covering layer preferably has a degree of hydrolysis of 5 to 100%. Even more preferably, the degree of hydrolysis is in the range of 10 to 98%, most preferably in the range of 20 to 95%.

At least a part of the hydrolyzed protein in the covering layer is preferably provided by animal digest. Preferred animal digest compositions contain one or more organs selected from viscera, liver, kidney spleen, lung and heart. Preferably, the covering layer contains 1-50%, more preferably 5-50% and most preferably 10-30% of dry animal digest by weight of the covering layer. Expressed differently, the covering layer preferably contains 0.1-5%, more preferably 0.5-3% and most preferably 1-3% of dry animal digest by weight of the dry pet food.

Flavouring is another palatability enhancing component that is advantageously employed in the covering layer. Preferably, the covering layer contains at least 10 ppm - 5 wt.%, more preferably 100 ppm - 3 wt.% and most preferably 5000 ppm - 2 wt.% of flavouring selected from flavouring top-notes, Maillard reaction flavours and combinations thereof.

The covering layer of the dry pet food preferably is made up of particulate matter. More preferably, at least 80 wt.% of the covering layers consists of particulate material having a diameter in the range of 10-1000 µm, especially in the range of 30-500 µm. This particulate material by be adhered to the core by means of a binding agent and/or intermediate coating layer(s).

The external coating of the dry pet food may suitably contain one or more additional layers besides the exterior covering layer. These optional one or more additional layers are located between the covering layer and the core of the dry pet food. According to a particularly preferred embodiment, the external coating includes a fat-containing coating layer that is located between the core and the covering layer, said fat-containing coating layer consisting of:
30-100 wt.% fat;
0-30 wt.% water;
0-60 wt.% of other edible components.

The fat-containing layer typically constitutes 1-30% by weight of the dry pet food. More preferably, the fat-containing layer constitutes 1.5-20%, most preferably 2-10% by weight of the dry pet food.

In accordance with one preferred embodiment the fat-containing layer contains at least 50 wt.% fat. Even more preferably, the fat-containing layer contains 50-100 wt.% fat, 0-40 wt.% water and 0-40 wt.% protinaceous matter, wherein said fat, water and proteinacous matter together constitute at least 70 wt.%, more preferably at least 80 wt.% of the fat-containing layer.

Preferably, the fat-containing layer contains 1-30 wt.%, even more preferably 2-20 wt.% of proteinaceous matter.

The fat-containing layer may suitably contain other ingredients besides fat, proteinaceous matter and water. Examples of such other ingredients include preservatives, antioxidants, minerals, carbohydrates, flavouring, colourant.

The fat that is contained in the fat-containing layer preferably contains at least 80 wt.%, more preferably at least 90 wt.% of triglycerides. The fat may suitably contain animal fat, vegetable oil, marine oil or combinations thereof. According to a particularly preferred embodiment, the fat contains at least 10 wt.% of an animal fat selected from poultry fat, lard, tallow, fish oil and combinations thereof.

The core of the dry pet food is at least partly covered by the external coating. Typically, the external coating covers at least 50%, more preferably at least 70% and most preferably at least 85% of the exterior surface of the core.

A dry cat food according to the present invention preferably contains:
- 20-60 wt.% proteinaceous matter;
- 20-60 wt.% carbohydrates;
- 10-30 wt.% fat;
- at least 500 mg/kg, preferably 1000-4000 mg/kg of vitamins selected from vitamin E, vitamin A, vitamin B12, vitamin D3, riboflavin, niacin (vitamin B3), pantothenate (vitamin B5), biotin (vitamin B8), thiamine (vitamin B1), folic acid (vitamin B9), pyroxidine hydrochloride (vitamin B6), and menadione sodium bisulfite complex (a source of vitamin K activity) and combinations thereof;
- at least 5 g/kg, preferably 10-25 g/kg of minerals selected from calcium, potassium, sodium, zinc, iron, copper and combinations thereof.

A dry dog food according to the present invention preferably contains:
- 20-50 wt.% proteinaceous matter;
- 20-80 wt.% carbohydrates;
- 2-40 wt.% fat;
- at least 500 mg/kg, preferably 1000-4000 mg/kg of vitamins selected from vitamin E, vitamin A, vitamin B12, vitamin D3, riboflavin, niacin (vitamin B3), pantothenate (vitamin B5), biotin (vitamin B8), thiamine (vitamin B1), folic acid (vitamin B9), pyroxidine hydrochloride (vitamin B6), and menadione sodium bisulfite complex (a source of vitamin K activity) and combinations thereof;
- at least 5 g/kg, preferably 10-25 g/kg of minerals selected from calcium, potassium, sodium, zinc, iron, copper and combinations thereof.

The dry pet food typically has a bulk density of 200-600 g/l, more preferably of 300-500 g/l and most preferably of 300-450 g/l.

The dry pet food of the present invention may have a moist, lubricious, "meaty"-looking appearance. The meat-like appearance may be enhanced by adding texture. Texture may be added using extrusion dies, moulds, or mechanical surface modification of the kibble before or after the coating is applied. The meat-like appearance may also be enhanced by adding colour. Artificial colorants may be used, as well as inorganic colorants such as iron oxide, or biologically-derived colourants, such as cochineal, carmine, or carminic acid. Alternatively, incorporation of red meats or red meat by-products, blood meal, or other red to dark-brown food ingredients may alter the colour of the pet food and make the kibble more meat-like in appearance. A moist appearance may be provided by using a brightener.

The texture of the pet food may be rendered more meat-like by modifying the softness of the food ("crunchy" texture not generally being associated with meat). The softness of the food may be adjusted by selecting a suitable coating or coatings and/or by applying glycerol in the core. These approaches do not preclude the use of other additives or techniques for enhancing the softness (or "chewiness") of the food.

The texture of the dry pet food can be characterized with the Young's modulus (kgf/cm2) of the pet food. For hard pet food the maximum pressure may be from 12 to 35 kgf/cm², more particularly from 12 to 20 kgf/cm². Soft pet food typically has a Young's Modulus of 1 to 12 kgf/cm², more particularly of 2 to 7 kgf/cm², especially of 2.5 to 5 kgf/cm².

Another aspect of the invention relates to the use of a dry pet food as defined herein before for feeding a companion animal, especially a companion animal selected from cats and dogs, Even more preferably, the dry pet food is used for feeding a cat.

Yet another aspect of the present invention relates to a process of manufacturing a dry pet food as described herein before, said process comprising the successive steps of:
- providing a dough comprising 20-40 wt.% starch; 10-40 wt.% protein; and 15-45 wt.% water;
- extruding the dough employing extrusion temperatures that exceeds 105°C;
- optionally, applying one or more coating compositions onto the extrudate; and
- applying a palatability enhancing composition onto the optionally coated extrudate, said palatability enhancing composition containing yeast extract and edible phosphate salt selected from pyrophosphate, triphosphate and combinations thereof.

It should be understood that the palatability enhancing composition may be applied as a single composition or, alternatively, that it may be applied in stages, e.g. by first applying the yeast extract and next the source of edible phosphate salt or *vice versa.* Preferably, the palatability enhancing composition is applied as a single composition.

The dough is suitably formed by combining a proteinaceous material with a farinaceous material and optionally other edible components. The proteinaceous material is a material having a proteinaceous matter content of at least 15% by weight of dry matter. Examples of proteinaceous material include vegetable proteins such as soybean protein, cotton seed protein, and peanut protein; animal proteins such as casein, albumin, and fresh animal tissue including fresh meat tissue and fresh fish tissue; and dried or rendered meals such as fish meal, poultry meal, meat meal, and bone meal. Other types of suitable proteinaceous materials include wheat gluten or corn gluten, and microbial proteins such as yeast.

The farinaceous material is a material having a proteinaceous matter content of less than 15% by weight of dry matter and containing at least 20% starch by weight of dry matter. Examples of farinaceous material include grains such as corn, milo, alfalfa, wheat, barley, rice, soy hulls, and other grains having low protein content.

Together, the proteinaceous material and the farinaceous material typically constitute at least 60%, more preferably at least 65% and most preferably 70-90% of the dry matter contained with the dough.

Other ingredients that may suitably be employed in the dough include vitamins, minerals, humectants, preservatives, fats and water.

The initial water content of the dough preferably is in the range of 18-40 wt.%, more preferably in the range of 20-35 wt.%. The presence of water in combination with the heating conditions employed during extrusion ensure that the starch within the dough becomes gelatinized. Gelatinization of the starch ensures that the extrudate retains its shape.

The dough is preferably cooked during extrusion under conditions of elevated temperature and pressure as these conditions favour starch gelatinization. Extrusion may be carried out in, for instance, a single screw or a twin screw (counter rotating) extruder. The extruder may be provided with a die having a particular shape, such as a circle, a ring or a cross. The extruded product is preferably segmented into discrete particles or pieces by a rotating cutting knife as the product is extruded.

In the present process the dough is preferably extruded at an extrusion temperature of 110-150 °C, more preferably of 120-140 °C. Here the extrusion temperature refers to the temperature of the dough during extrusion.

The palatability enhancing composition that is applied in the present process can be a powder, a paste, a gel or a liquid. Preferably, the palatability enhancing composition is a powder, more preferably a free flowing powder.

According to a particularly preferred embodiment of the invention, the yeast extract that is contained in the palatability enhancing composition is an agglomerated dry yeast extract. Preferably, the agglomerated dry yeast extract has a mass weighted average particle size of 50-1000 µm, more preferably of 100-800 µm and most preferably of 200-750 µm.

The yeast extract in the palatability enhancing composition typically has a bulk density in the range of 300-600 kg/m³, more preferably in the range of 400-600 kg/m³.

The yeast extract is applied onto the optionally coated extrudate in a concentration of 0.3-10 % and most preferably 0.3-4% by weight of the dry pet food, said weight percentages being calculated on a dry weight basis.

The edible phosphate salt employed in the present process preferably is pyrophosphate, especially pyrophosphate selected from tetrasodium pyrophosphate, trisodium pyrophosphate, disodium pyrophosphate, tetrapotassium pyrophosphate, tripotassium pyrophosphate, dipotassium pyrophosphate and combinations thereof. More referably the pyrophosphate is selected from tetrasodium pyrophosphate, tetrapotassium pyrophosphate and combinations thereof. Most preferably, the pyrophosphate used is tetrasodium pyrophosphate.

The edible phosphate salt is applied onto the optionally coated extrudate in a concentration of at least 0.1%, even more preferably of at least 0.2% by weight of the dry pet food. The edible phosphate salt is applied onto the extrudate in a concentration that does not exceed 4% and most preferably does not exceed 3% by weight of the dry pet food.

According to a preferred embodiment of the present process, the palatability enhancing composition contains a source of hydrolyzed protein. The source of hydrolyzed protein is typically applied in a concentration of 0.5-12%, more preferably of 1-4% by weight of the dry pet food, said weight percentages being calculated on a dry weight basis.

In accordance with one particular embodiment of the present process, the palatability enhancing composition is a powder, preferably a powder having a mass weighted average diameter in the range of 30-800 µm, more preferably in the range of 50-600 µm. Preferably, this powdery palatability enhancing composition has the composition of the covering layer as defined herein before.

In a particularly preferred embodiment of the present process the palatability enhancing composition is a particulate composition comprising particulate dry yeast and a particulate source of hydrolyzed protein, and optionally further particulate ingredients.

According to an alternative embodiment, the palatability enhancing composition is an aqueous liquid or a paste, most preferably a liquid. Besides yeast extract and the source of hydrolyzed protein the liquid or pasty palatability enhancing composition may suitably contain other ingredients.

The source of hydrolyzed protein typically contains at least 50% of proteinaceous matter by weight of dry matter. More preferably, the source of hydrolyzed protein contains at least 60%, most preferably at least 70% of proteinaceous matter by weight of dry matter.

The source of hydrolyzed protein that is employed in the process preferably contains hydrolyzed protein selected from hydrolyzed animal protein, hydrolyzed vegetable protein and combinations thereof. Preferably, source of hydrolyzed protein contains hydrolyzed animal protein. The hydrolyzed animal protein preferably originates from an animal selected from poultry, pig, beef, lamb, fish and combinations thereof.

The hydrolyzed protein in the source of hydrolyzed protein preferably has a degree of hydrolysis of to 5-100%. Even more preferably, the degree of hydrolysis is in the range of 10 to 98%, most preferably in the range of 20 to 95%.

According to a particularly preferred embodiment, the source of hydrolyzed protein is animal digest. Preferred animal digest compositions contain viscera and/or liver.

The palatability enhancing composition may suitably contain further ingredients such as further palatability enhancing ingredients, fat, carbohydrates, yeast (whole cells or cell wall fragments), minerals, anti-oxidants, preservatives and colouring.

Examples of further palatability enhancing components that are advantageously contained in the palatability enhancing composition besides the yeast extract, the edible phosphate salt and the optional source of hydrolyzed protein include: free fatty acids; flavouring and combinations thereof.

Flavouring is another palatability enhancing component that is advantageously applied onto the optionally coated extrudate. The flavouring may be applied in the form of a concentrated topnote and/or in the form of a much less potent flavour ingredient (e.g. a spray dried reaction flavour). Preferably, flavouring is applied onto the optionally coated extrudate in a concentration, calculated on the total dry pet food, of 10 ppm to 5 wt.%, more preferably 100 ppm to 3 wt.% and most preferably of 1000 ppm to 2 wt.%, said flavouring selected from flavouring top-notes, Maillard reaction flavours and combinations thereof.

A typical palatability enhancing composition that can suitably employed in the present process has the following composition (percentages by weight of dry matter):
- 20-50% yeast extract;
- 0-20% yeast;
- 10-50% animal digest;
- 5-30% edible phosphate salt;
- 0-20% fat;
- 0-10%, preferably 0.1-10% flavouring; and
- 0-10% of other ingredients .

According to a particularly preferred embodiment, the present process comprises the step of applying a fat-containing coating compositions onto the extrudate before the application of the dry yeast extract.

The fat-containing coating composition is typically applied in an amount of 1 to 30% by weight of the final dry pet food. More preferably, the fat-containing coating composition is applied in an amount of 1.5 to 20%, most preferably of 2 to 10% by weight of the dry pet food. The fat-containing coating composition is typically applied by spraying it onto the extruded dough. Preferably, the fat-containnig coating composition that is sprayed onto the extruded dough has a temperature in excess of 30°C, preferably of 32-80°C.

In accordance with a preferred embodiment the fat-containing coating composition contains at least 50 wt.% fat. Even more preferably, the fat-containing coating contains 50-100 wt.% fat, 0-30 wt.% water and 0-40 wt.% protinaceous matter, wherein said fat, water and proteinacous matter together constitute at least 70 wt.%, more preferably at least 80 wt.% of the fat-containing coating composition. Preferably, the fat-containing coating composition contains 1-30 wt.%, even more preferably 2-20 wt.% of proteinaceous matter.

The fat-containing coating composition may suitably contain other ingredients besides fat, proteinaceous matter and water. Examples of such other ingredients include preservatives, antioxidants, minerals, carbohydrates, flavouring, colourant.

The invention is further illustrated by the following non-limiting examples. Example 4 is provided for reference.

### EXAMPLES

### Example 1

Cat kibbles were prepared by extruding a dough, and cutting the extruded dough into pieces having a piece weight of approximately 0.2 g. The composition of the dough is described in Table 1

**Table 1**

| | **Wt.%** |
|---|---|
| Cereals | 27.4 |
| Vegetable by-products | 5.3 |
| Vegetable protein extract | 5.9 |
| Egg and egg by-products | 0.4 |
| Meat and animal by-products | 23.6 |
| Yeast | 1.6 |
| Oil and fat | 2.8 |
| Minerals and vitamins | 3.0 |
| Water | 30.0 |

Next, the pieces of extrudate were coated with a coating emulsion in a batch coater by spraying an emulsion having a temperature of 40°C onto the pieces while stirring with a 2 paddle mixer. The composition of the coating emulsion is described in Table 2

**Table 2**

| | **Wt.%** |
|---|---|
| Fat | 66.7 |
| Poultry by-product* | 27.3 |
| Preservatives | 2.7 |
| Anti-oxidant | 0.7 |
| Minerals | 1.3 |
| Sugars | 1.3 |
| * Water: 67%, Protein: 25%, Ash: 1.4%, Fat: 6.6% | |

The coated kibbles so obtained contained approximately 9% of coating by weight of the coated kibble.

### Example 2

Two different powder palatants were applied to the emulsion coated kibbles described in Example 1 by gradually introducing the powder palatant (2% to 3% by weight of the coated kibbles) into a batch coater that was filled with the coated kibbles whilst stirring the kibbles with a 2 paddles mixer.

The composition of the two powder palatants is described in Table 3.

**Table 3**

| | **% by weight of coated kibble** | |
|---|---|---|
| | **Product 1** | **Control** |
| Animal digest ¹ | 0.8 | 0.8 |
| Yeast extract ² | 1.0 | 0 |
| Na₃HP₂O₇ | 0.4 | 0.4 |
| Other ingredients | 0.8 | 0.8 |
| ¹ Poultry or pork by-products - 40-50% protein | | |
| ²Agglomerated yeast extract with a mass weighted average particle size of appr. 600 µm | | |

The moisture content of the cat kibbles so obtained was approximately 6 wt.%.

Three feeding trials were conducted with the two different coated cat kibbles (Product 1 and Control). In these feeding trials called "two-bowl test" or "versus test" the two products were presented simultaneously to each of 30 cats (individual feeding station accessible via individual cat collar chip). Identical amounts of product were served in each of the two bowls. In each of the three feeding trials the cats were twice exposed to the two products. The position of the two bowls was switched in the second exposure to avoid any biais. The quantity eaten was measured after a maximum of 16 hours of exposure. Statistical anaylsis (Analysis of variance) were made on the data to conclude on the significativity of the effect. The outcome of these feeding trials is summarized in Tables 4a, 4b and 4c

**Table 4a**

| **Variable** | **Control** | **Product 1** | **p-value** |
|---|---|---|---|
| Weight Eaten (g) | 17.7 | 29.86 | 0.0000 |
| Count (Pets) | 30 | 30 | |

**Table 4b**

| **Variable** | **Control** | **Product 1** | **p-value** |
|---|---|---|---|
| Weight Eaten (g) | 15.0 | 24.2 | 0.0001 |
| Count (Pets) | 30 | 30 | |

**Table 4c**

| **Variable** | **Control** | **Product 1** | **p-value** |
|---|---|---|---|
| Weight Eaten (g) | 15.7 | 22.1 | 0.0208 |
| Count (Pets) | 30 | 30 | |

### Example 3

Different powder palatants are applied to the emulsion coated kibbles described in Example 1 by gradually introducing the powder palatant into a batch coater that was filled with the coated kibbles whilst stirring the kibbles with the 2 paddles mixer. The compositions of the different powder palatants (by weight of the coated kibbles) are described in Table 5.

**Table 5**

| | **%by weight of the coated kibbles** | | | |
|---|---|---|---|---|
| | **1** | **A** | **B** | **Control** |
| Pyrophosphate | 0.4 | 0.4 | 0 | 0 |
| Yeast extract ¹ | 1.0 | 0 | 1.0 | 0 |
| Same yeast extract as in Example 2 | | | | |

The cat kibbles 1, A and B as well as the control kibbles are subjected to a cat feeding trial. The results show that the cats preferred kibbles 1, A and B over the control kibbles. The trials further show that cats clearly prefer cat kibbles 1 over cat kibbles A and B.

### Comparative example 4

Fat coated cat kibbles were prepared using the procedure described in Example 1, except that this time the pieces of extrudate were coated with fat in a batch coater by spraying molten chicken fat having a temperature of 40°C onto the pieces while stirring with a 2 paddle mixer. Different powder palatants were applied to the fat coated kibbles described in Example 1 (0.74-1.74% by weight of the coated kibbles) by gradually introducing the powder palatant into a batch coater that was filled with the coated kibbles whilst stirring the kibbles with a 2 paddles mixer. The compositions of the different powder palatants (by weight of the coated kibbles) are described in Table 6.

**Table 6**

| | **% by weight of coated kibbles** | | |
|---|---|---|---|
| | **1** | **A** | **B** |
| Pyrophosphate | 0.74 | 0.74 | 0 |
| Yeast extract | 1.0 | 0 | 1.0 |

A feeding trial was conducted with the three different coated cat kibbles. In this feeding trial called "two-bowl test" or "versus test" the three products were offered to the cats in three different pairs of two products. The two products were presented simultaneously to each of 30 cats (individual feeding station accessible via individual cat collar chip). Identical amounts of product were served in each of the two bowls. The cats were twice exposed to the two same products. The position of the two bowls was switched in the second exposure to avoid any bias. The quantity eaten was measured after a maximum of 16 hours of exposure. Statistical anaylsis (Analysis of variance) were made on the data to conclude on the significativity of the effect. The outcome of these feeding trials is summarized in Table 7.

**Table 7**

| **Combination** | **Numer of cats** | **Average amount eaten (grams)** | | **Difference (grams)** |
|---|---|---|---|---|
| 1 versus A | 29 | 29.79 (1) | 7.75 (A) | 22.04 ± 5.42 ¹ |
| 1 versus B | 29 | 24.21 (1) | 8.59 (B) | 15.62 ± 5.28 ¹ |
| A versus B | 30 | 6.24 (A) | 18.73 (B) | -12.49 ± 6.38 ¹ |
| ¹Confidence interval of 95% | | | | |

## Claims

1. A dry pet food comprising 50-99.5 wt.% of a core and 0.5-50 wt.% of an external coating that covers at least a part of the core and that is composed of one or more layers, including a covering layer that is located on the outside of the pet food, said dry pet food having a total water content of not more than 15 wt.%; said core containing:
• carbohydrates in a concentration of 20-90 % by weight of the core, said carbohydrates including starch in a concentration of 5-50% by weight of the core;
• protein in a concentration of 10-50% by weight of the core;
• fat in a concentration of 0-40% by weight of the core;
said covering layer being composed of:
• 10-80 wt.% dry yeast extract;
• 0.5-30 wt.% of edible phosphate salt selected from pyrophosphate, triphosphate and combinations thereof by weight of the covering layer;
• 0-70 wt.% of other edible components;
wherein the dry yeast extract is contained in the covering layer in a concentration of 0.3-10%, preferably of 0.7-6% and most preferably of 1-3% by weight of the dry pet food and wherein the edible phosphate salt is contained in the covering layer in a minimum concentration of at least 0.1% by weight of the dry pet food, and in a maximum concentration that does not exceed 0.4% and preferably does not exceed 0.3% by weight of the dry pet food.

2. Dry pet food according to claim 1, wherein at least 80 wt.% of the covering layer consists of particulate matter having a diameter in the range of 10-1000 µm.

3. Dry pet food according to claim 1 or 2, wherein the dry yeast extract is an agglomerated dry yeast extract having a mass weighted average particle size of 50-1000 µm.

4. Dry pet food according to any one of the preceding claims, wherein the edible phosphate salt is pyrophosphate.

5. Dry pet food according to claim 4, wherein the pyrophosphate is selected from tetrasodium pyrophosphate, trisodium pyrophosphate, disodium pyrophosphate, tetrapotassium pyrophosphate, tripotassium pyrophosphate, dipotassium pyrophosphate and combinations thereof.

6. Dry pet food according to any one of the preceding claims, wherein the covering layer contains 2-80 wt.% hydrolyzed protein.

7. Dry pet food according to any one of the preceding claims, wherein the external coating additionally includes a fat-containing coating layer that is located between the core and the covering layer, said fat-containing coating layer consisting of:
• 30-100 wt.% fat;
• 0-30 wt.% water;
• 0-60 wt.% of other edible components.

8. Use of a dry pet food according to any one of the preceding claims for feeding a companion animal, preferably a companion animal selected from cats and dogs.

9. A process of manufacturing a dry pet food according to any one of claims 1-7, said process comprising the successive steps of:
• providing a dough comprising 20-40 wt.% starch; 10-40 wt.% protein; and 15-45 wt.% water;
• extruding the dough employing extrusion temperatures that exceeds 105°C;
• optionally, applying one or more coating compositions onto the extrudate; and
• applying a palatability enhancing composition onto the optionally coated extrudate, said palatability enhancing composition containing yeast extract and edible phosphate salt selected from pyrophosphate, triphosphate and combinations thereof.

10. Process according to claim 9, wherein the yeast extract is applied onto the optionally coated extrudate in a concentration of 0.3-10%, preferably of 0.7-6% and most preferably 1-3% by weight of the dry pet food, said weight percentages being calculated on a dry weight basis.

11. Process according to claim 9 or 10, wherein the edible phosphate salt is pyrophosphate.

12. Process according to any one of claims 9-11, wherein the edible phosphate salt is applied onto the optionally coated extrudate in a minimum concentration of at least 0.1%, and in a maximum concentration that does not exceed 0.4% and preferably does not exceed 0.3% by weight of the dry pet food.

13. Process according to any one of claims 9-12, wherein the palatability enhancing composition contains a source of hydrolyzed protein, said source of hydrolysed protein containing at least 50% of proteinaceous matter by weight of dry matter.

14. Process according to any one of claims 9-13, wherein a fat-containing coating composition is applied onto the extrudate before the application of the dry yeast extract.

## Patentansprüche

1. Trockenes Heimtierfutter, umfassend 50-99,5 Gew.-% an einem Kern und 0,5-50 Gew.-% an einer Außenbeschichtung, die wenigstens einen Teil des Kerns bedeckt und die aus einer oder mehreren Schichten besteht, einschließlich einer Deckschicht, die an der Außenseite des Heimtierfutters angeordnet ist, wobei das trockene Heimtierfutter einen Gesamtwassergehalt von nicht mehr als 15 Gew.-% aufweist; wobei der Kern enthält:
• Kohlenhydrate in einer Konzentration von 20-90 Gew.-% des Kerns, wobei die Kohlenhydrate Stärke in einer Konzentration von 5-50 Gew.-% des Kerns umfassen;
• Protein in einer Konzentration von 10-50 Gew.-% des Kerns;
• Fett in einer Konzentration von 0-40 Gew.-% des Kerns;
wobei die Deckschicht aus:
• 10-80 Gew.-% an trockenem Hefeextrakt;
• 0,5-30 Gew.-% an essbarem Phosphatsalz ausgewählt aus Pyrophosphat, Triphosphat und Kombinationen davon, bezogen auf das Gewicht der Deckschicht;
• 0-70 Gew.-% an anderen essbaren Komponenten;
besteht, wobei der trockene Hefeextrakt in einer Konzentration von 0,3-10 Gew.-%, vorzugsweise 0,7-6 Gew.-% und höchst bevorzugt 1-3 Gew.-% des trockenen Heimtierfutters in der Deckschicht enthalten ist und wobei das essbare Phosphatsalz in einer Mindestkonzentration von wenigstens 0,1 Gew.-% des trockenen Heimtierfutters und in einer Höchstkonzentration, die 0,4 Gew.-% nicht übersteigt und vorzugsweise 0,3 Gew.-% des trockenen Heimtierfutters nicht übersteigt, in der Deckschicht enthalten ist.

2. Trockenes Heimtierfutter gemäß Anspruch 1, wobei wenigstens 80 Gew.-% der Deckschicht aus partikelförmigem Material mit einem Durchmesser in dem Bereich von 10-1000 µm bestehen.

3. Trockenes Heimtierfutter gemäß Anspruch 1 oder 2, wobei der trockene Hefeextrakt ein agglomerierter trockener Hefeextrakt mit einer massegewichteten mittleren Partikelgröße von 50-1000 µm ist.

4. Trockenes Heimtierfutter gemäß einem der vorstehenden Ansprüche, wobei das essbare Phosphatsalz Pyrophosphat ist.

5. Trockenes Heimtierfutter gemäß Anspruch 4, wobei das Pyrophosphat ausgewählt ist aus Tetranatriumpyrophosphat, Trinatriumpyrophosphat, Dinatriumpyrophosphat, Tetrakaliumpyrophosphat, Trikaliumpyrophosphat, Dikaliumpyrophosphat und Kombinationen davon.

6. Trockenes Heimtierfutter gemäß einem der vorstehenden Ansprüche, wobei die Deckschicht 2-80 Gew.- % an hydrolysiertem Protein enthält.

7. Trockenes Heimtierfutter gemäß einem der vorstehenden Ansprüche, wobei die Außenbeschichtung zusätzlich eine fetthaltige Beschichtungsschicht enthält, die zwischen dem Kern und der Deckschicht angeordnet ist, wobei die fetthaltige Beschichtungsschicht aus:
• 30-100 Gew.-% Fett;
• 0-30 Gew.-% Wasser;
• 0-60 Gew.-% an anderen essbaren Komponenten; besteht.

8. Verwendung eines trockenen Heimtierfutters gemäß einem der vorstehenden Ansprüche zum Füttern eines Haustiers, vorzugsweise eines Haustiers ausgewählt aus Katzen und Hunden.

9. Verfahren zur Herstellung eines trockenen Heimtierfutters gemäß einem der Ansprüche 1-7, wobei das Verfahren die aufeinanderfolgenden Schritte umfasst:
• Bereitstellen eines Teigs, der 20-40 Gew.-% Stärke; 10-40 Gew.-% Protein; und 15-45 Gew.-% Wasser umfasst;
• Extrudieren des Teigs unter Einsatz von Extrusionstemperaturen, die 105 °C übersteigen;
• gegebenenfalls Aufbringen einer oder mehrerer Beschichtungszusammensetzungen auf das Extrudat; und
• Aufbringen einer geschmacksverbessernden Zusammensetzung auf das gegebenenfalls beschichtete Extrudat, wobei die geschmacksverbessernde Zusammensetzung Hefeextrakt und essbares Phosphatsalz ausgewählt aus Pyrophosphat, Triphosphat und Kombinationen davon umfasst.

10. Verfahren gemäß Anspruch 9, wobei der Hefeextrakt in einer Konzentration von 0,3-10 Gew.-%, vorzugsweise 0,7-6 Gew.-% und höchst bevorzugt 1-3 Gew.-% des trockenen Heimtierfutters auf das gegebenenfalls beschichtete Extrudat aufgebracht wird, wobei die Gewichtsprozentwerte auf Trockengewichtsbasis berechnet sind.

11. Verfahren gemäß Anspruch 9 oder 10, wobei das essbare Phosphatsalz Pyrophosphat ist.

12. Verfahren gemäß einem der Ansprüche 9-11, wobei das essbare Phosphatsalz in einer Mindestkonzentration von wenigstens 0,1 Gew.-% und in einer Höchstkonzentration, die 0,4 Gew.-% nicht übersteigt und vorzugsweise 0,3 Gew.-% des trockenen Heimtierfutters nicht übersteigt, auf das gegebenenfalls beschichtete Extrudat aufgebracht wird.

13. Verfahren gemäß einem der Ansprüche 9-12, wobei die geschmacksverbessernde Zusammensetzung eine Quelle von hydrolysiertem Protein enthält, wobei die Quelle von hydrolysiertem Protein wenigstens 50 Gew.-%, bezogen auf das Trockengewicht, an proteinhaltigem Material enthält.

14. Verfahren gemäß einem der Ansprüche 9-13, wobei vor dem Aufbringen des trockenen Hefeextrakts auf das Extrudat eine fetthaltige Beschichtungszusammensetzung aufgebracht wird.

## Revendications

1. Aliment sec pour animaux domestiques comprenant 50 à 99,5 % en poids d'un noyau et 0,5 à 50 % en poids d'un revêtement externe qui recouvre au moins une partie du noyau et qui est composé d'une ou plusieurs couches, comprenant une couche de couverture qui est située sur la partie externe de l'aliment pour animaux domestiques, ledit aliment sec pour animaux domestiques possédant une teneur totale en eau inférieure ou égale à 15 % en poids ; ledit noyau contenant :
• des glucides en une concentration de 20 à 90 % en poids du noyau, lesdits glucides comprenant de l'amidon en une concentration de 5 à 50 % en poids du noyau ;
• des protéines en une concentration de 10 à 50 % en poids du noyau ;
• des graisses en une concentration de 0 à 40 % en poids du noyau ;
ladite couche de couverture étant composée de :
• 1 à 80 % en poids d'extrait sec de levure ;
• 0,5 à 30 % en poids de sel de phosphate comestible choisi parmi le pyrophosphate, le triphosphate et des combinaisons correspondantes en poids de la couche de couverture ;
• 0 à 70 % en poids d'autres composants comestibles ;
l'extrait sec de levure étant contenu dans la couche de couverture en une concentration de 0,3 à 10 %, préférablement de 0,7 à 6 % et le plus préférablement de 1 à 3 % en poids de l'aliment sec pour animaux domestiques et le sel de phosphate comestible étant contenu dans la couche de couverture en une concentration minimale d'au moins 0,1 % en poids de l'aliment sec pour animaux domestiques et en une concentration maximale qui n'excède pas 0,4 % et préférablement qui n'excède pas 0,3 % en poids de l'aliment sec pour animaux domestiques.

2. Aliment sec pour animaux domestiques selon la revendication 1, au moins 80 % en poids de la couche de couverture étant constituée de matière particulaire possédant un diamètre dans la plage de 10 à 1000 µm.

3. Aliment sec pour animaux domestiques selon la revendication 1 ou 2, l'extrait sec de levure étant un extrait sec de levure aggloméré possédant une grosseur moyenne de particule pondérée en fonction de la masse de 50 à 1000 µm.

4. Aliment sec pour animaux domestiques selon l'une quelconque des revendications précédentes, le sel de phosphate comestible étant le pyrophosphate.

5. Aliment sec pour animaux domestiques selon la revendication 4, le pyrophosphate étant choisi parmi le pyrophosphate tétrasodique, le pyrophosphate trisodique, le pyrophosphate disodique, le pyrophosphate tétrapotassique, le pyrophosphate tripotassique, le pyrophosphate dipotassique et des combinaisons correspondantes.

6. Aliment sec pour animaux domestiques selon l'une quelconque des revendications précédentes, la couche de couverture contenant 2 à 80 % en poids de protéines hydrolysées.

7. Aliment sec pour animaux domestiques selon l'une quelconque des revendications précédentes, le revêtement externe comprenant de plus une couche de revêtement contenant des graisses qui est située entre le noyau et la couche de couverture, ladite couche de revêtement contenant des graisses étant constituée de :
• 30 à 100 % en poids de graisses ;
• 0 à 30 % en poids d'eau ;
• 0 à 60 % en poids d'autres composants comestibles.

8. Utilisation d'un aliment sec pour animaux domestiques selon l'une quelconque des revendications précédentes pour l'alimentation d'un animal de compagnie, préférablement un animal de compagnie choisi parmi les chats et les chiens.

9. Procédé de fabrication d'un aliment sec pour animaux domestiques selon l'une quelconque des revendications 1 à 7, ledit procédé comprenant les étapes successives de :
• mise à disposition d'une pâte comprenant 20 à 40 % en poids d'amidon ; 10 à 40 % en poids de protéines ; et 15 à 45 % en poids d'eau ;
• extrusion de la pâte en employant des températures d'extrusion qui excèdent 105 °C ;
• éventuellement, application d'une ou plusieurs compositions de revêtement sur l'extrudat ; et
• application d'une composition d'augmentation de la palatabilité sur l'extrudat éventuellement revêtu, ladite composition d'augmentation de la palatabilité contenant de l'extrait de levure et un sel de phosphate comestible choisi parmi le pyrophosphate, le triphosphate et des combinaisons correspondantes.

10. Procédé selon la revendication 9, l'extrait de levure étant appliqué sur l'extrudat éventuellement revêtu en une concentration de 0,3 à 10 %, préférablement de 0,7 à 6 % et le plus préférablement de 1 à 3 % en poids de l'aliment sec pour animaux domestiques, lesdits pourcentages en poids étant calculés en poids sec.

11. Procédé selon la revendication 9 ou 10, le sel de phosphate comestible étant le pyrophosphate.

12. Procédé selon l'une quelconque des revendications 9 à 11, le sel de phosphate comestible étant appliqué sur l'extrudat éventuellement revêtu en une concentration minimale d'au moins 0,1 % et en une concentration maximale qui n'excède pas 0,4 % et préférablement n'excède pas 0,3 % en poids de l'aliment sec pour animaux domestiques.

13. Procédé selon l'une quelconque des revendications 9 à 12, la composition d'augmentation de la palatabilité contenant une source de protéines hydrolysées, ladite source de protéines hydrolysées contenant au moins 50 % de matière protéique par poids de matière sèche.

14. Procédé selon l'une quelconque des revendications 9 à 13, une composition de revêtement contenant des graisses étant appliquée sur l'extrudat avant l'application de l'extrait sec de levure.
